# EUROPÄISCHE PATENTANMELDUNG

(11) **EP 1 176 373 A1**
(43) Veröffentlichungstag der Anmeldung: **30.01.2002**
(21) Anmeldenummer: 01117881.1
(22) Anmeldetag: 23.07.2001
(51) Int. Cl.: F25B 27/00, F25B 29/00, F25B 41/00

(54) **Kältemittelanlage**

(30) Priorität: 24.07.2000 DE 10036219
(71) Anmelder: Melidis, Paris, 82140 Olching (DE)
(72) Erfinder: Melidis, Paris, 82140 Olching (DE)
(74) Vertreter: Rössig, Rolf

(57) **Zusammenfassung**

Die Erfindung betrifft eine Kältemittelanlage mit einer Kompressoreinrichtung (1) zur Förderung eines Kältemittels aus einem ersten Leitungsabschnitt mit einem ersten Druckpegel in einen zweiten Leitungsabschnitt mit einem zweiten und gegenüber dem ersten Druckpegel erhöhten Druckpegel. Die Anlage umfasst eine Expansionseinrichtung (6) zur Weitergabe des Kältemittels in einen dritten Abschnitt mit einem dritten Druckpegel der zwischen dem ersten und dem zweiten Druckpegel liegt, wobei eine Heizeinrichtung (10) vorgesehen ist, zum Aufheizen des Kältemittels in dem zweiten Abschnitt. Hierdurch wird es auf vorteilhafte Weise möglich, eine durch Sonnenenergie betriebene Klimaanlage zu schaffen.

## Beschreibung

Die Erfindung betrifft eine Kältemittelanlage insbesondere zur Raumklimatisierung.

Herkömmliche Kältemittelanlagen zur Raumklimatisierung umfassen üblicherweise einen durch einen Motor angetriebenen Kompressor zur Komprimierung eines Kältemittels z.B. Propangas, einen Wärmetauscher zur Abkühlung und Verflüssigung des komprimierten Kältemittels, sowie einen Verdampfer zur Aufnahme von Wärmenergie aus der zu klimatisierenden Umgebung.

Aufgrund der zunehmenden Verbreitung von Klimaanlagen auch im privaten Wohnbereich ergibt sich ein hoher Anstieg des Netzleistungsbezuges. Auch unter ökologischen Gesichtspunkten erscheint der Trend zur Wohnungs und Arbeitsplatklimatisierung insbesondere im Hinblick auf den erheblichen Energiebezug der Klimaanlagen als bedenklich.

Unter dem Eindruck dieses Problems liegt der Erfindung die Aufgabe zugrunde, eine Kältemittelanlage zu schaffen die sich durch eine verbesserte ökologische Verträglichkeit auszeichnet.

Diese Aufgabe wird erfindungsgemäß gelöst durch eine Kältemittelanlage mit einer Kompressoreinrichtung zur Förderung eines Kältemittels aus einem ersten Abschnitt mit einem ersten Druckpegel p1 in einen zweiten Abschnitt in welchem ein gegenüber dem ersten Druckpegel p1 erhöhter zweiter Druckpel p2 herrscht,einer Expansionseinrichtung zur Weitergabe des Kältemittels von dem zweiten Abschnitt in einen dritten Abschnitt mit einem dritten Druckpegel p3 der zwischen dem ersten Druckpegel p1 und dem zweiten Druckpegel p3 liegt, und einer Solar-Heizeinichtung zum Aufheizen des Kältemittels in dem zweiten Abschnitt.

Dadurch wird es auf vorteilhafte Weise möglich, unter einem geringen Leistungsbezug - oder bei entsprechender Heizleistung der Heizeinrichtung mit Leistungsüberschuß einen Kältemittelkreislauf zu betreiben. Durch den erfindungsgemäßen Kältemittelkreislauf wird es möglich, das verflüssigte und abgekühlte Kältemittel zu Klimatisierungszwecken zu verwenden. Weiterhin wird es möglich, durch die im dritten Abschnitt abgeführte Wärme, Brauchwaser zu erhitzen. Der ggf. seitens der Expansionseinrichtung anfallende Leistungsüberschuß kann zu Leistung mechanischer Arbeit herangezogen werden beispielsweise zum Betrieb eines Generators. Die Kältemittelanlage kann auch zu Heizzwecken verwendet werden.

Eine gemäß einem besonderen Aspekt der vorliegenden Erfindung vorteilhafte Ausführungsform ist dadurch gegeben, daß die Heizeinrichtung eine Sonnenkollektor-Heizeinrichtung ist. Dadurch wird es auf ökologisch besonders vorteilhafte Weise möglich, eine Klimaanlage netzunabhängig und damit vollkommen autark auch in abgelegenen Gegenden oder beispielsweise auch auf mobilen Objekten beispielsweise Camping- oder Kühlfahrzeugen zu betreiben.

Die Expansionseinrichtung ist in vorteilhafter Weise durch eine hydrostatische Arbeitsmaschine gebildet. Hierbei wird bereits bei relativ kleinen Gasvolumenströmen ein hoher Betriebswirkungsgrad erreicht. Als besonders vorteilhaft haben sich hierbei neben Kolben-Systemen insbesondere Flügelzellen, Axialkolben- und Schrauben- oder Zahnradsysteme erwiesen.

Insbesondere bei großen Anlagen mit Gasvolumenströmen von mehr als 200l/s ist es in vorteilhafter Weise möglich die Expansionseinrichtung als vorzugsweise mehrstufige hydrodynamische Arbeitsmaschine auszubilden. Es ist möglich zwei Expansionseinrichtungen unterschiedlicher Volumenleistung parallel anzuordnen und den einzelnen oder gemeinsamen Betrieb der beiden auf einen optimalen Betriebspunkt abgestimmt vorzunehmen.

Die Fördereinrichtung zur Förderung des Kältemittels von dem ersten Abschnitt des Kältemittelkreislaufes in den zweiten Abschnitt des Kältemittelkreislaufes ist gemäß einer besonders bevorzugten Ausführungsform der Erfindung als hydrostatische Pumpeneinrichtung ausgebildet. Neben Hubkolbensystemen können auch hier in vorteilhafter Weise Flügelzellenfördereinrichtungen zur Anwendung gelangen.

Zur Förderung und Verdichtung des Kältemittels vom ersten in den zweiten Abschnitt können insbesondere bei großen Volumenströmen ebenso wie bei der Expansionseinrichtung vorzugsweise mehrstufige hydrodynamische Fördereinrichtungen insbesondere Radialverdichter Anwendung finden.

Ein besonders hoher Betriebswirkungsgrad wird gemäß einer besonders bevorzugten Ausführungsform der Erfindung dadurch erreicht, daß die Expansionseinrichtung und die Fördereinrichtung mechanisch gekoppelt sind. Diese mechanische Koppelung kann in vorteilhafter Weise unter einem vorbestimmten Übersetzungsverhältnis erfolgen, das den beiden Druckgradienten sowie der aufheizungsbedingten Volumenvergrößerung Rechnung trägt, erfolgen.

Um einen Betrieb der Kältemittelanlage stets im Bestbetriebspunkt zu ermöglichen, ist das Übersetzungsverhältnis vorzugsweise einstellbar. Die Einstellbarkeit kann durch eine Schaltgetriebeanordung oder vorzugsweise durch ein stufenloses Getriebe erfolgen.

Ein Entweichen des Kältemittels wird in vorteilhafter Weise dadurch vermieden, daß sowohl die Fördereinrichtung die Expansionseinrichtung als auch die Kopplungseinrichtung vollständig durch eine gemeinsame Dichtgehäuseeinrichtung gekapselt ausgebildet sind.

Die Expansionseinrichtung und die Fördereinrichtung können gemäß einem besonderen Aspekt der vorliegenden Erfindung auch integral ausgebildet sein. So ist es beispielsweise möglich eine Hubkolbenanordnung mit zwei Zylindern unterschiedlicher Hubvolumina vorzusehen, wobei beide Hubkolben durch eine gemeinsame Exzenter- oder Kurbelwelleneinrichtung betrieben werden. In vorteilhafter Weise kann hier eine BOXER-Anordnung der beiden Zylinder gewählt werden, wodurch sich eine verringerte Lagerbelastung und damit eine verlängerte Lebensdauer ergibt. Auch bei Flügelzellensystemen ist es möglich entweder zwei unterschiedliche Flügelräder auf einer Achse anzuordnen oder das Flügelrad so anzuorden, daß dieses eine Verdichtungszone und eine Expansionszone durchstreift.

In dem dritten Abschnitt des Kältemittelkreislaufes ist gemäß einer besonders bevorzugten Ausführungsform der Erfindung ein Wärmetauscher vorgesehen, zur Abkühlung des im zweiten Abschnitt erhitzten Kältemittels. Der Wärmetauscher kann beispielsweise als Umgebungsluft gekühlter Wärmetauscher ausgebildet sein. Alternativ hierzu oder auch in Kombination damit ist es möglich, den Wärmetauscher auch als Brauchwassererhitzer zu verwenden. Es ist möglich den hohen Energieanteil zur Brauchwassererhitzung zu verwenden und die weitere Abkühlung durch Umgebungsluft vorzunehmen. Hierzu ist der Wärmetauscher vorzugsweise als Kombinationswärmetauscher ausgebildet, zur Erhitzung von Wasser und/oder Umgebungsluft.

Alternativ zu einer unmittelbaren mechanischen Koppelung ist es auch möglich,die Fördereinrichtung mit einem Elektromotor zu koppeln und über diesen Elektromotor gesteuert zu betreiben.

Die Expansionseinrichtung kann auch im Falle einer mechanischen Koppelung mit der Fördereinrichtung zusätzlich mit einem Generator gekoppelt werden. Insbesondere bei niedrigen Umgebungstemperaturen und ansonsten stärkerer Sonneneinstrahlung kann die Kältemittelanlage als Spannungsversorgungseinrichtung betrieben werden.

Eine ideale Abstimmung der Förderleistung der Fördereinrichtung sowie der Expansionseinrichtung aufeinander, wird in vorteilhafter Weise dadurch erreicht, daß der Elektromotor und der Generator über eine Steuereinrichtung leistungsgekoppelt sind.

Der Elektromotor und der Generator sind in vorteilhafter Weise integriert ausgebildet. Hierdurch wird es möglich, beispielsweise im Falle unzureichender Heizleistung des zweiten Kreislaufabschnittes das System durch Antrieb der Förder- und der Expansionseinrichtung zu betreiben. Bei erhöhter Heizleistung wird der Motor als Generator wirksam.

In vorteilhafter Weise ist wenigstens eine eine Bypassleitung vorgesehen, zur Überbrückung der Heizeinrichtung des zweiten Abschnittes. Hierdurch wird es möglich bedarfsweise die Heizeinrichtung auszukoppeln und das Kältemittel unmittelbar in den Wärmetauscher bzw. Kühler des zweiten Abschnitts zu leiten. In der Bypassleitung ist vorzugsweise eine Ventileinrichtung vorgesehen, zum Öffnen oder Schließen der Bypassleitung.

In vorteilhafter Weise ist eine Temperaturerfassungseinrichtung vorgesehen ist, zur Erfassung der Aufheizung des Kältemittels in dem zweiten Abschnitt. Auf Grundlage hiermit erfasster Temperaturmesswerte ist es möglich einen optimalen Bertiebszustand der Kältemittelanlage einzustellen.

Eine im Hinblick auf die Verwendung der erfindungsgemäßen Kältemittelanlage zu Klimatisierungszwecken besonders vorteilhafte Ausführungsform der Erfindung ist dadurch gegeben, daß in dem ersten Abschnitt eine Verdampfereinrichtung vorgesehen ist, zum Verdampfen des aus dem dritten Abschnitt in den ersten Abschnitt geführten Kältemittels. Die hierbei seitens des Kältemittels bezogene Verdampfungswärme kann unter entsprechender Kühlwirkung der Raumluft eine Arbeits-Wohn- oder Kühlraumes entzogen werden.

Gemäß einer besonders bevorzugten Ausführungsform der Erfindung ist es möglich Überbrückungs-Leitungseinrichtung vorzuehen, zur Überbrückung des ersten Abschnittes. Hierdurch wird es möglich, Kältemittel unter Umgehung des Verdampfers ggf. in flüssigem Zustand in den zweiten Abschnitt einzuspeisen. Die Einspeisung erfolgt vorzugsweise unter Zwischenschaltung einer hydrostatischen Pumpe vorzugsweise einer Zahnradpumpe. Durch die Einspeisung flüssigen Kältemittels in den zweiten Abschnitt d.h. in die Heizeinrichtung wird die mechanische Arbeit der Expansionseinrichtung weiter gesteigert. Hierdurch wird es möglich die Kühlleistung oder auch die Stromerzeugung der Anlage zu erhöhen. Es ist auch möglich einen Teilstrom durch den Verdampfer und einen Teilstrom über den hierzu parallelen Weg zu führen.

In vorteilhafter Weise ist in dem System ein Kältemittelspeicher vorgesehen, zur Speicherung des Kältemittels in flüssigem Zustand. Hierdurch wird insbesondere der Anlauf des Kältmittelkreislaufes erleichtert.

In weiterhin vorteilhafter Weise ist eine Pufferspeichereinrichtung vorgesehen, zur Bereitstellung eines Kühlmediums. Diese beispielsweise während einer Spitzenbetriebszeit aufgeheizte Kühlmedium kann zeitlich versetzt, beispielsweise während während der Nachtzeit bei verringerter Umgebungstemperatur abgekühlt werden.

Eine gemäß einem weiteren Aspekt der vorliegenden Erfindung vorteilhafte Ausführungsform der Heizeinrichtung ist dadurch gegeben, daß diese mit dem Wärmetauscher zu einer Baueinheit integriert ausgebildet ist. Das so gebildete Modul kann in platzsparender Weise im Dachbereich eines Hauses, einer Halle oder eines Fahrzeuges angeordnet werden.

Eine im Hiblick auf eine besonders hohe Rücklauftemperatur des Kältemittels aus der Heizeinrichtung vorteilhafte Ausführungsform der Erfindung ist dadurch gegeben, daß die Heizeinrichtung eine Fokussier-Linsenanordnung umfaßt zur Bündelung der Hitzestrahlung und fokussierten Aufstrahlung auf die zur Durchleitung des Kältemittels vorgesehenen Heizleitungen. Die Heizleitungen sind vorzugsweise aus einem Metalwerkstoff insbesondere einer wärmefesten Stahllegierung oder auch aus einer Kupferlegierung gefertigt. Die Heizleitungen sind vorzugsweise mit hinreichender Sicherheit auf einen Betriebsdruck von 80 bar ausgelegt.

Die Linsenanordnung ist gemäß einer besonders bevorzugten Ausführungsform der Erfindung durch eine Fresnell-Linsenanordnung gebildet. Es ist auch möglich andere optische Prinzipien zur Bündelung des Sonnenlichtes auch die Heizleitungen vorzusehen. Neben Brechungsefekten können auch Reflektions- oder Brechungs/Reflektionsefekte zur Bündelung des Lichtes auch die Heizleitungen herangezogen werden.

Zumindest im Bereich der Heizeinrichtungen ist vorzugsweise eine Isoliereinrichtung vorgesehen ist, zur Isolierung der Kältemittelheizleitungen. Hierdurch wird es möglich, das Kältemittel weitgehend unabhängig von der Umgebungstemperatur auf einen der Sonnenstrahlungsleistung entsprechenden Temperaturpegel aufzuheizen. Insbesondere bei der kombinierten Ausführungsform von Heizeinrichtung und Wärmetauscher wird eine unvorteilhafte Wärmeübertragung auf den Kältemittelverflüssiger vermieden. Die Isoliereinrichtung ist in vorteilhafter Weise aus einem Glasschaummaterial gebildet.

An die aus Glasschaum gebildete Isoliereinrichtung ist in vorteilhafter Weise eine Glasplatte in abdichtender Weise angefügt so daß nach außen hin eine witterungsunempfindliche Einheit gegeben ist. Die die Fresnell-Linsenanordnung kann unmitlebar in die Abdeck-Glasplatte ausgebildet sein. Die Heizleitungen sind mit Vorteil abschnittsweise abdichtend in den Glasschaum eingebettet.

Die eingangs angegebene Aufgabe wird in verfahrenstechnischer Hinsicht auch gelöst durch ein Verfahren zur Transformation von Solar-Wärme bei welchem ein Kältemittel mittels einer Fördereinrichtung aus einem ersten Abschnitt mit einem ersten Druckpegel in einen zweiten Abschnitt mit einem zweiten Druckpegel gefördert wird, in dem zweiten Abschnitt durch Solar-Wärme erhitzt wird, das erhitzte Kältemittel mittels einer Expansionseinrichtung in einen dritten Abschnitt expandiert und in dem dritten Abschnitt abgekühlt wird, wobei der Druck in dem Dritten Abschnitt derart eingestellt ist, daß das Kältemittel sich verflüssigt, wobei das Kältemittel von dem Dritten Abschnitt in den ersten Abschnitt zurückgeführt wird.

Hierdurch wird es möglich eine Klimanalage unter vermindertem oder sogar ohne Fremdleistungsbezug zu betreiben. Bei hoher Wärmestrahlung wird es möglich mechanische Arbeit freizusetzen.

In dem ersten Abschnitt wird vorzugsweise das Kältemittel verdampft. Der Systemdruck liegt hierzu vorzugsweise im Bereich von 1,5 bis 8 bar.

Die seitens der Expansionseinrichtung freigesetzte mechanische Arbeit wird in vorteilhafter Weise zum Antrieb der Fördereinrichtung und/oder eines Generators verwendet. Das Leistungskoppelungsverhältnis zwischen der Fördereinrichtung und der Expansionseinrichtung wird vorzugsweise in Abhängigkeit von der Heizleistung im zweiten Abschnitt eingestellt. Hierdurch ergibt sich ein hoher Systemwirkungsgrad.

Unter Kältemittel ist im vorliegenden Fall ein Medium zu verstehen, das bei den in dem System herrschenden Druck/Temperaturzuständen einen gasförmigen oder einen flüssigen Aggregatszustand einnimmt. Für die erfindungsgemäße Anlage eignen sich insbesondere Kältemittel wie Tolulol, Flurinol 100, Propan, Isobutan, Ammoniak (R717), Dichlortetraäthan (R114), Difluoridchlormethan (R12), Trichlorfluormethan (R11), Trichlortrifluoräthan (R113).

Bei einem reinen Generatorbetrieb ist es möglich ein Arbeitsmedium zu verwenden das bei den im System auftretenden Druck/Temperaturwerten ausschließlich flüssig oder gasförmig ist.

In vorteilhafter Weise wird der im Hinblick auf die im zweiten Abschnitt zugeführte Heizleistung optimale Betriebspunkt des Kältemittelkreislaufes mittels einer Rechnereinrichtung ermittelt. Die Drücke in den einzelnen Abschnitten des Kältemittelkreislaufes werden im Hinblick auf eine durchdie Rechnereinrichtung ermittelte Kreislaufoptimierung derart eingestellt, daß sich ein maximaler Anlagenwirkungsgrad ergibt. Es ist möglich, die Anlage derart zu betreiben, daß ein bestimmter Energieanteil zur Raumklimatisierung verwendet wird,und ein ggf. anfallender Energieüberschuß in das elektrische Netz eingespeist oder in einer Speichereinrichtung gespeichert wird.

Vorzugsweise ist die Heizeinrichtung eine Sonnenkolektor-Heizeinrichtung. Die Expansionseinrichtung ist vorzugweise eine hydrostatische Arbeitsmaschine beispielsweise eine Kolbenmaschine, eine Flügelzellenmaschine oder eine Zahnradoder Schraubenmaschine.

Es ist auch möglich, die Expansionseinrichtung als hydrodynamische Arbeitsmaschine auszugestalten. Diese Ausführungsform eignet sich insbesondere für große Gasdurchsätze.

Bei Anlagengrößen bis ca. 40kW ist die Fördereinrichtung ist vorzugsweise eine hydrostatische Pumpeneinrichtung beispielsweise eine Kolben- oder Membran Pumpeneinrichtung. Bei größeren Speisemengen ist die Fördereinrichtung eine vorzugsweise mehrstufige hydrodynamische Pumpeneinrichtung.

Die Expansionseinrichtung und die Fördereinrichtung sind vorzugsweise schaltbar miteinander mechanisch gekoppelt. Die Expansionseinrichtung und die Fördereinrichtung sind vorzugsweise in einer gemeinsamen Gehäuseeinrichtung abgedichtet aufgenommen.

In dem dritten Abschnitt ist vorzugsweise ein Wärmetauscher vorgesehen, zur Abkühlung des im zweitenAbschnitt erhitzten Kältemittels. Dieser Wärmetauscher ist vorzugsweise ein Umgebungsluftkühler.

Alternativ hierzu - oder auch in Kombination mit dieser Maßnahme ist es auch möglich, den Wärmetauscher als Brauchwasser-Erhitzer einzusetzen.

Vorzugsweise ist der Wärmetauscher ein Kombinationswärmetauscher zur Erhitzung von Wasser und/oder Umgebungsluft

Die Expansionseinrichtung ist vorzugsweise mit einem Generator gekoppelt. Der Elektromotor und Generator sind vorzugsweise über eine Steuereinrichtung leistungsgekoppelt. Der Elektromotor und Generator sind vorzugsweise wechselweise als solche betreibbar.

Vorzugsweise ist wenigstens eine Bypassleitung vorgesehen, zur Überbrückung der Heizeinrichtung des zweiten Abschnittes. In der Bypassleitung ist vorzugsweise eine Ventileinrichtung vorgesehen, zum Öffnen oder Schließen der Bypassleitung.

Vorzugsweise ist eine Temperaturerfassungseinrichtung vorgesehen ist, zur Erfassung der Aufheizung des Kältemittels in dem zweiten Abschnitt.

Vorzugsweise ist in dem ersten Abschnitt eine Verdampfereinrichtung vorgesehen, zum Verdampfen des aus dem dritten Abschnitt in den ersten Abschnitt geführten Kältemittels.

In vorteilhafter Weise ist eine Überbrückungs-Leitungseinrichtung vorgesehen, zur Überbrückung des ersten Abschnittes.

In die Überbrückungsleitngseinrichtung ist vorzugsweise eine hydrostatische Fördereinrichtung eingesetzt. In dem System ist vorzugsweise ein Kältemittelspeicher vorgesehen, zur Speicherung des Kältemittels in flüssigem Zustand.

Vorzugsweise ist auch eine Pufferspeichereinrichtung vorgesehen, zur Bereitstellung eines Kühlmediums, wobei das aufgeheizte Kühlmedium während der Nachtzeit abgekühlt wird.

Der Wärmetauscher und die Heizeinrichtung sind vorzugsweise zu einer Baueinheit integriert.

Die Heizeinrichtung umfasst vorzugsweise eine Fokussier-Linsenanordnung, die vorzugsweise eine Fresnell-Linsenanordnung ist.

In vorteilhafter Weise ist eine Isoliereinrichtung vorgesehen, zur Isolierung der Kältemittelheizleitungen. Die Isoliereinrichtung ist vorzugsweise durch Glasschaum gebildet. Die aus Glasschaum gebildete Isoliereinrichtung ist vorzugsweise an eine Glasplatte in abdichtender Weise angefügt.

Vorzugsweise ist die Fresnell-Linsenanordnung in der Glasplatte ausgebildet. Die Aufheizung des Kältemittels erfolgt vorzugsweise durch Heizleitungen wobei die Heizleitungen abschnittsweise abdichtend in den Glasschaum eingebettet sind.

Die eingangs angegebene Aufgabe wird auch gelöst durch ein Verfahren zur Transformation von Solar-Energie bei welchem ein Kältemittel mittels einer Fördereinrichtung aus einem ersten Abschnitt mit einem ersten Druckpegel in einen zweiten Abschnitt mit einem zweiten Druckpegel gefördert wird, in dem zweiten Abschnitt durch Solar-Wärme erhitzt wird, das erhitzte Kältemittel mittels einer Expansionseinrichtung in einen dritten Abschnitt expandiert und in dem dritten Abschnitt abgekühlt wird, wobei der Druck in dem Dritten Abschnitt derart eingestellt ist, daß das Kältemittel sich verflüssigt, wobei das Kältemittel von dem Dritten Abschnitt in den ersten Abschnitt zurückgeführt wird.

Vorzugsweise wird das Kältemittel in dem ersten Abschnitt verdampft. Die seitens der Expansionseinrichtung freigesetzte mechanische Arbeit wird vorzugsweise zum Antrieb der Fördereinrichtung und/oder eines Generators verwendet.

Das Leistungskoppelungsverhältnis zwischen der Fördereinrichtung und der Expansionseinrichtung wird vorzugsweise in Abhängigkeit von der Heizleistung im zweiten Abschnitt abgestimmt.

Weitere Einzelheiten und Merkmale der Erfindung ergeben sich aus der nachfolgenden Beschreibung in Verbindung mit der Zeichnung. Es zeigen:
- **Fig.1**: eine vereinfachte Prinzipskizze zur Erläuterung des Aufbaues einer ersten bevorzugten Ausführungsform der erfindungsgemäßen Kältemittelanlage;
- **Fig.2**: eine Skizze zur Erläuterung eines Kombinationsmodules mit integriertem Sonnnenkollektor und Umgebungsluft-Wärmetauscher;
- **Fig.3**: eine Skizze zur Erläuterung einer bevorzugten Ausführungsform eines Hochtemperatur Kollektors zur Aufheizung eines vorzugsweise organischen Kältemittels.

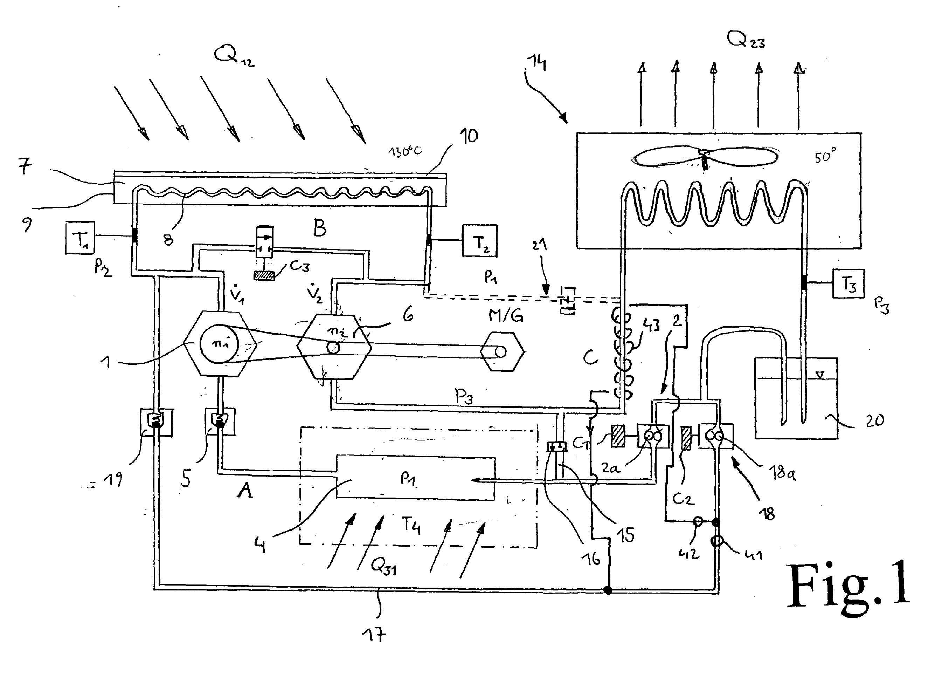

Die in Fig.1 dargestellte Kältemittelanlage soll zur nachfolgenden Erläuterung in drei Abschnitte "A", "B" und "C" untergliedert betrachtet werden.

### Erster Abschnitt A:

Der erste Abschnitt A erstrecktsich hier zwischen einer Dosiereinrichtung 2 und einer Fördereinrichtung 1 zur Förderung eines Kältemittels beispielsweise Propangas aus einem ersten Abschnitt A.

Die Fördereinrichtung 1 ist als hydrostatischer Verdichter ausgebildet und fördert bei einer Drehzahl n1 einen Volumenstrom v1. Der hydrostatische Verdichter ist hier in Hubkolbenbauart oder Flügelzellenbauart ausgeführt.

Die Dosiereinrichtung 2 ist hier durch eine Zahnradfördereinrichtung 2a gebildet. Die Fördermenge wird durch einen Dosierstelltrieb c1 eingestellt. Die Steuerung des Dosierstelltriebes c1 erfolgt über eine hier nicht näher dargestellte programmierte Rechnereinrichtung. Alternativ hierzu ist es möglich, die Dosiereinrichtung durch eine Fördereinrichtung anderer Bauart oder auch durch eine Drosseleinrichtung zu bilden.

In dem ersten Abschnitt A befindet sich weiterin ein Verdampfer durch welchen bei einer Temperatur T4 und einem in dem Verdampfer herrschenden Druck p1 aus der Umgebung des Verdampfers ein Wärmestrom Q31 abgeführt werden kann.

Weiterhin ist eine Rückschlagventileinrichtung 5 vorgesehen durch welche eine Rückströmung von Kältemittel in den Verdampfer 4 verhindert werden kann.

Der erste Abschnitt A ist über eine Parallelleitung 17 überbrückbar. Zur einstellung der durch die Parallelleitung 17 geführten Kältemittelmenge ist eine Dosiereinrichtung 18 vorgesehen die hier durch eine durch einen Dosierantrieb c2 gesteuerte Zahnradfördereinrichtung 18 einstellbar ist. Zur Vermeidung einer Strömung in Gegenrichtung ist ein Rückschlagventil 19, vorgesehen.

Zur Bereitstellung einer ausreichenden Vorratsmenge an Kältemittel ist ein Vorrastbehälter 20 vorgesehen. Der Pegelstand in dem Vorratsbehälter wird vorzugsweise seitens der zentralen Steuereinrichtung berücksichtigt.

### Zweiter Abschnitt B:

An die Fördereinrichtung 1 schließt sich ein zweiter Anlagenabschnitt B an der sich hier bis zu einer Expansionseinrichtung 6 erstreckt. Die Expansionseinrichtung 6 ist im vorligenden Falle durch eine hydrostatische Arbeitsmaschine gebildet.

In dem zweiten Abschnitt B ist eine Heizeinrichtung 7 vorgesehen. Die Heizeinrichtung ist hier durch einen Hochtemperatur-Sonnenkolektor gebildet und umfaßt eine Heizleitungseinrichtung 8 , eine Isolieranordnung 9 und eine Abdeckscheibeneinrichtung 10.

In der Heizeinrichtung 7 wird das Kältemittel unter Zufuhr des Wärmestromes Q12 weiter erhitzt. Zur Erfassung der Temperatur des erhitzten Kältemittels ist ein Temperatursensor T2 vorgesehen.

Die Eingangstemperatur des Kältemittel vor Eintritt in die Heizeinrichtung wird durch einen Temperatursensor T1 erfaßt. Auf Grundlage der Temperaturdifferenz T2-T1 kann in Verbindung mit der beispielsweise über die Drehzahlen der Fördereinrichtung 1 und der Expansionseinrichtung 6 die Heizleistung bzw. die zugeführte Wärmemenge errechnet werden.

Zur Überbrückung des zweiten Abschnittes B ist eine Bypasseinrichtung 11 vorgesehen durch welche das Kältemittel an der Heizeinrichtung in dem Kreislauf vorbeigeführt werden kann. Die Bypasseinrichtung 11 ist über eine Ventileinrichtung 12 gesteuert zu öffnen. Die Betätigung der Ventileinrichtung 12 erfolgt über einen Aktuator c3.

### Dritter Abschnitt C:

Zwischen der Expansionseinrichtung 6 und der Dosiereinrichtung 2 erstreckt sich ein dritter Abschnitt C. Der dritte Abschnitt C umfaßt einen Wärmetauscher 14. Bei der hier dargestellten Ausführungsform ist der Wärmetauscher 14 als Wasser/Umgebungsluft-Kombinationswärmetauscher ausgeführt. Über den Wärmetauscher 14 kann aus dem Kältemittel der Wärmestrom Q23 abgeführt werden.

Zur Erfassung de Temperatur am Ausgang des Wärmetauschers 14 ist ein Temperatursensor T3 vorgesehen. Am Ausgang des Wärmetauschers 14 herrscht ein Druck p3 der über einen hier nicht dargestellten Drucksensor erfaßt werden kann.

Der dritte Abschnitt kann über eine Überbrückungsleitung 15 überbrückt werden. Der Überbrückungsgrad ist über eine Drosseleinrichtung 16 im Bereich zwischen 0 bis 70% einstellbar. Die Ansteuerung erfolgt ebenfalls über die zentrale Steuerung.

### Aufbau des Druckes in dem zweiten Abschnitt B:

Der Druck in dem zweiten Abschnitt B wird bestimmt durch die Menge an zugeführtem Kältemittel, der zugeführten Wärmemenge, und der über die Expansionseinrichtung 6 abgeführten Kältemittelmenge.

Das Druckniveau wird insbesondere durch eine gegenseitige Verspannung der Fördereinrichtung 1 und der Expansionseinrichtung 6 erreicht. Diese Verspannung kann mechanisch durch entsprechende Übersetzungkoppelung oder durch entsprechende Ansteuerung erfolgen.

Die Expansionseinrichtung 6 ist hier mit einer Motor/Generator-Einrichtung M/G verbunden. Über diese Einrichtung ist bei der gezeigten Ausführungsform auch die Fördereinrichtung 1 antreibbar.

Die Expansionseinrichtung 6 ist über eine Überbrückungseinrichtung 21 überbrückbar.

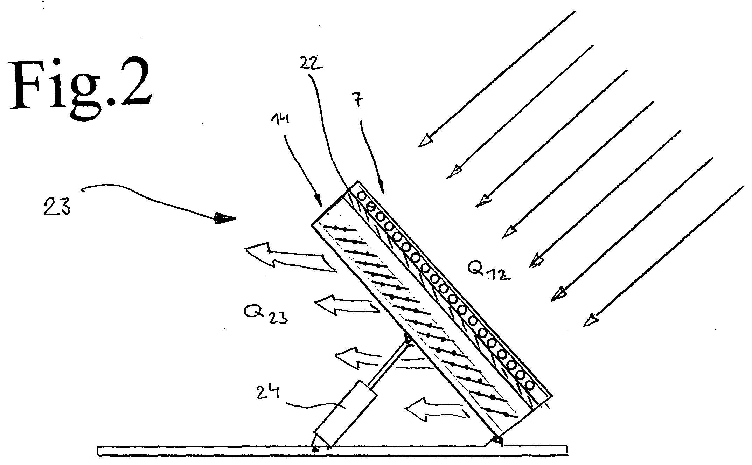

In Fig.2 ist eine bevorzugte Ausführugsform eines Solar-Klimamodules 23 dargestellt das einen Hochtemperatur-Sonnenkolektor 7 und einen Umgebungsluft-Wärmetauscher 14 aufweist. Der Wärmetauscher 14 ist auf einer Schattenseite des Sonnenkollektores 7 angeordnet. Zwischen Wärmetauscher und Sonnenkollektor ist eine Isoliereinrichtung 22 vorgesehen. Die Neigung des Solar-Klimamodules 23 ist entsprechend dem Sonnenstand variabel einstellbar. Hierzu ist ein Stelltrieb 24 vorgesehen. Die Einstellung erfolgt vorzugsweise ebenfalls nach Maßgabe der zentralen Steuereinrichtung.

Die Rohrleitungen des Wärmetauschers sind durch ein Strangpressprofil gebildet und sind fächerartig angeordnet. Die Rohrleitungen sind derart bemessen, daß diese einem Kältemitteldruck bis 200bar standhalten. Die Ausrichtung ist derart getrofen, daß ein Schornsteineffekt erreicht wird. Ggf. kann zur verbesserten Abkühlung auch eine Gebläseeinrichtung vorgesehen werden.

In vorteilhafter Weise sind die Fördereinrichtung, Expansionseinrichtung und der Motor/Generator M/G ebenfalls in das Solar-Modul 23 integriert. Das Solar-Modul kann damit auch ohne Integration in ein Klimasystem zur Energiegewinnung Anwendung finden.

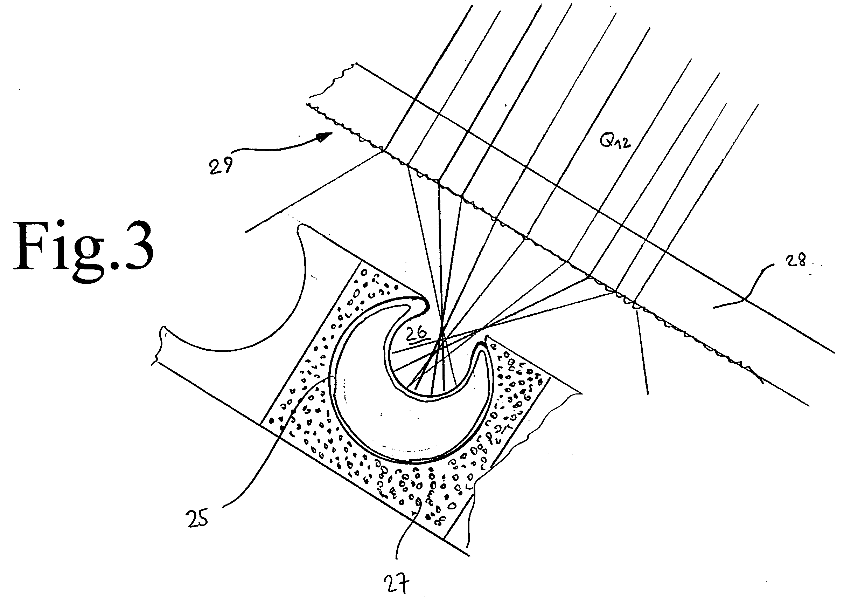

In Fig.3 ist stark vereinfacht ein Detail einer bevorzugten Ausführungsform einer Heizeinrichtung 7 dargestellt. Die Heizleitung 8 ist hier durch ein Rohrprofil 25 gebildet. Das Rohrprofil 25 bildet eine Kaverne 26 die hier eine matt-schwarze Oberfläche aufweist.

Das Rohrprofil 25 ist mittels einer Glasschaumisolierung 27 nach außen weitgehend isoliert. Mehrere derartiger Einheiten aus Isolierkörper und Rohrprofil 25 sind nebeneinanderliegend in eine Ebene oder Zylinderfläche angeordnet und in den Kältemittelkreislauf eingekoppelt.

In Lichteintrittsrichtung gesehen vor dem Rohrprofil 25 ist eine Abdeckscheibe 28 angeordnet. Die Abdeckscheibe 28 ist mit optischen Mitteln 29 versehen die das einfallende Licht in die entsprechenden Kavernen ablenken. Bei der hier dargestellten Ausführungsform sind die optischen Mittel durch Fresnell-Linsenstufen gebildet. Bei den nahen Linsenstufen beruht die Ablenkung des Lichtes auf einem Brechungseffekt. Bei den von der jeweiligen Heizleitung weiter beabstandeten Stufen beruht die Ablenkung auf Totalreflektionseffekten.

Die optischen Mittel können auch auf der Außenfläche der Absdeckscheibe und/oder in einer Zwischenschicht ausgebildet sein. Die Abdeckscheibe kann sich auf dem Isolierkörper abstützen.

### Funktionsbeschreibung:

In den Abschnitten A, B und C herrschen unterschiedliche Druckpegel, p1, p2 und p3. Der Druck p1 beträgt beispielsweise 1,5 bar. Durch die Fördereinrichtung 1 wird Kältemittel in den zweiten Abschnitt gefördert und hierbei auf den Druck p2 von beispielsweise 60 bar verdichtet. Hierbei erwärmt sich das Kältemittel zunächst auf die Temperatur T2 und wird anschließend in der Heizeinrichtung 7 weiter erhitzt.

In der Expansionseinrichtung 6 erfolgt eine im wesentlichen adiabate Expansion auf den Druck p3. Die hierbei freiwerdende Energie wird zum Teil zum Antrieb der Fördereinrichtung 1 sowie zum restlichen Teil zum Antrieb des Generators G/M verwendet. In dem Wärmetauscher 14 wird das Kältemittel unter dem Druck p3 verflüssigt. Das verflüssigte Kältemittel gelangt in den Vorratsbehälter 20. Aus dem Vorratsbehälter 20 heraus gelangt ein über eine Dosiereinrichtung 2 gesteuert dosierter Kältemittelstrom in den Verdampfer 4. Über den Verdampfer 4 kann Wärme Q31 aus einem zu kühlenden Raum oder Medium abgeführt werden. Das in dem Verdampfer verdampfte und erwärmte Kältemittel wird über die Fördereinrichtung 1 erneut in die Heizeinrichtung eingespeist. Ein Teilstrom des aus dem Vorratsbehälter 20 abgezweigten Kältemittels wird unter Zuhilfenahme einer Dosierzahnradpumpe 18 über das Rückschlagventil 19 unmittelbar in die Heizeinrichtung 7 eingespeist werden. Hierdurch wird die Arbeitsleistung der Expansionseinrichtung 6 noch weiter erhöht. Ggf. ist es möglich eine "Speisekältemittelvorwärmung" vorzunehmen. Diese kann durch Wärmetausch mit dem Kältemittel zwischen Expansionseinrichtung 6 und dem eigentlichen Wärmetauscher 14, erfolgen. Es ist möglich einen inneren Wärmeaustausch (Innentauscher 43)zwischen dem durch 18a gefördeten, flüssigen Kältemittel und dem noch unkekühlten Kältemittel stromabwärts der Expansionseinrichtung 6, vorzunehmen. Die für diesen Inneren Wärmeaustausch erforderlichen Leitungen sind vorzugsweise über Ventile 41, 42, an steuerbar.

## Patentansprüche

1. Kältemittelanlage mit einer Kompressoreinrichtung zur Förderung eines Kältemittels aus einem ersten Abschnitt mit einem ersten Druckpegel p1 in einen zweiten Abschnitt in welchem ein gegenüber dem ersten Druckpegel p1 erhöhter zweiter Druckpel p2 herrscht,einer Expansionseinrichtung zur Weitergabe des Kältemittels von dem zweiten Abschnitt in einen dritten Abschnitt mit einem dritten Druckpegel p3 der zwischen dem ersten Druckpegel p1 und dem zweiten Druckpegel p3 liegt, und einer Heizeinichtung zum Aufheizen des Kältemittels in dem zweiten Abschnitt.

2. Kältemittelanlage nach Anspruch 1, **dadurch gekennzeichnet, daß** die Heizeinrichtung eine Sonnenkolektor-Heizeinrichtung ist und/oder daß die Expansionseinrichtung eine Hydrostatische Arbeitsmaschine ist, und/oder, daß die Expansionseinrichtung eine hydrodynamische Arbeitsmaschine ist, und/oder, daß die Fördereinrichtung eine hydrostatische Pumpeneinrichtung ist.

3. Kältemittelanlage nach Anspruch 1 oder 2, **dadurch gekennzeichnet, daß** die Expansionseinrichtung und die Fördereinrichtung mechanisch gekoppelt sind.

4. Kältemittelanlage nach wenigstens einem der Ansprüche 1 bis 3, **dadurch gekennzeichnet, daß** in dem dritten Abschnitt ein Wärmetauscher vorgesehen ist, zur Abkühlung des im zweiten Abschnitt erhitzten Kältemittels.

5. Kältemittelanlage nach wenigstens einem der Ansprüche 1 bis 4, **dadurch gekennzeichnet, daß** der Wärmetauscher ein Umgebungsluftkühler und/ ein Brauchwasser-Erhitzer, und/oder ein Kombinationswärmetauscher zur Erhitzung von Wasser und/oder Umgebungsluft ist.

6. Kältemittelanlage nach wenigstens einem der Ansprüche 1 bis 5, **dadurch gekennzeichnet, daß** die Expansionseinrichtung mit einem Generator gekoppelt ist.

7. Kältemittelanlage nach wenigstens einem der Ansprüche 1 bis 6, **dadurch gekennzeichnet, daß** Elektromotor und Generator über eine Steuereinrichtung leistungsgekoppelt sind.

8. Kältemittelanlage nach wenigstens einem der Ansprüche 1 bis 7, **dadurch gekennzeichnet, daß** wenigstens eine Bypassleitung vorgesehen ist, zur Überbrückung der Heizeinrichtung des zweiten Abschnittes, und/oder daß in der Bypassleitung eine Ventileinrichtung vorgesehen ist, zum Öffnen oder Schließen der Bypassleitung, und/oder daß eine Temperaturerfassungseinrichtung vorgesehen ist, zur Erfassung der Aufheizung des Kältemittels in dem zweiten Abschnitt, und/oder daß in dem ersten Abschnitt eine Verdampfereinrichtung vorgesehen ist, zum Verdampfen des aus dem dritten Abschnitt in den ersten Abschnitt geführten Kältemittels, und/oder daß eine Überbrückungs-Leitungseinrichtung vorgesehen ist, zur Überbrückung des ersten Abschnittes, und/oder daß in die Überbrückungsleitngseinrichtung eine hydrostatische Fördereinrichtung eingesetzt ist, und/oder daß in dem System ein Kältemittelspeicher vorgesehen ist, zur Speicherung des Kältemittels in flüssigem Zustand, und/oder, daß eine Pufferspeichereinrichtung vorgesehen ist, zur Bereitstellung eines Kühlmediums, wobei das aufgeheizte Kühlmedium während der Nachtzeit abgekühlt wird, und/oder daß der Wärmetauscher und die Heizeinrichtng zu einer Baueinheit integriert sind.

9. Kältemittelanlage nach wenigstens einem der Ansprüche 1 bis 8, **dadurch gekennzeichnet, daß** die Heizeinrichtung eine Fokussier-Linsenanordnung umfaßt, und/oder, .daß die Linsenanordnung eine Fresnell-Linsenanordnung ist, und/oder, daß eine Isoliereinrichtung vorgesehen ist, zur Isolierung der Kältemittelheizleitungen, und/oder daß die Isoliereinrichtung durch Glasschaum gebildet ist, und/oder daß die aus Glasschaum gebildete Isoliereinrichtung an eine Glasplatte in abdichtender Weise angefügt ist, und/oder daß die Fresnell-Linsenanordnung in der Glasplatte ausgebildet ist, und/oder daß die Aufheizung des Kältemittels durch Heizleitungen erfolgt, und daß die Heizleitungen abschnittsweise abdichtend in den Glasschaum eingebettet sind.

10. Verfahren zur Transformation von Solar-Energie bei welchem ein Kältemittel mittels einer Fördereinrichtung aus einem ersten Abschnitt mit einem ersten Druckpegel in einen zweiten Abschnitt mit einem zweiten Druckpegel gefördert wird, in dem zweiten Abschnitt durch Solar-Wärme erhitzt wird, das erhitzte Kältemittel. mittels einer Expansionseinrichtung in einen dritten Abschnitt expandiert und in dem dritten Abschnitt abgekühlt wird, wobei der Druck in dem Dritten Abschnitt derart eingestellt ist, daß das Kältemittel sich verflüssigt, wobei das Kältemittel von dem Dritten Abschnitt in den ersten Abschnitt zurückgeführt wird.
